# FASCICULE DE BREVET EUROPEEN

(11) **EP 1 607 268 B1**
(45) Date de publication et mention de la délivrance du brevet: **30.03.2011**
(21) Numéro de dépôt: 05103999.8
(22) Date de dépôt: 12.05.2005
(51) Int. Cl.: B60Q 1/14, H01H 19/10

(54) **Système d'indexage mécanique, notamment pour commutateur électrique**
Mechanische Kennzeichnung, insbesondere für elektrische Schalter
Mechanical indexing, especially for an electrical switch

(30) Priorité: 17.06.2004 FR 0406576
(43) Date de publication de la demande: 21.12.2005
(73) Titulaire: SC2N, 94042 Creteil Cedex (FR)
(72) Inventeur: Meinrad, Hugues, 14123 Ifs (FR); Lagniel, Benoît, 14860 Amfreville (FR); Heroult, Jean-Louis, 14790 Verson (FR)
(74) Mandataire: Croonenbroek, Thomas Jakob

(56) Documents cités:
- EP-A- 0 601 462
- EP-A- 1 022 186
- EP-A- 1 304 259

## Description

La présente invention concerne le domaine des systèmes d'indexage mécanique.

Elle trouve application notamment, mais non exclusivement, dans les commutateurs électriques, en particulier pour véhicules automobiles.

De nombreux systèmes d'indexage ont déjà été proposés.

La fonction générale des moyens d'indexage mécanique est de définir avec précision une pluralité de positions relatives de deux sous-ensembles, par exemple, d'une part une embase qui porte des éléments de contactage électrique et, d'autre part un équipage mobile par rapport à l'embase et qui porte des moyens de commande des éléments de contactage.

Typiquement, les moyens d'indexage sont ainsi adaptés pour définir au moins une position de repos dans laquelle un élément de contactage est dans un premier état, par exemple ouvert, et au moins une position de travail dans laquelle le même élément de contactage est dans un second état différent du premier, par exemple fermé.

Généralement, les systèmes d'indexage connus sont formés d'un poussoir porté par un premier sous-ensemble et sollicité par un organe élastique contre une rampe d'indexage formée sur un second sous-ensemble.

Les systèmes d'indexage peuvent être adaptés pour contrôler le déplacement relatif entre deux sous-ensembles, dans une direction ou dans deux directions inclinées entre elles, par exemple perpendiculaires entre elles.

Dans ce dernier cas, les systèmes d'indexage connus utilisent un poussoir sphérique et une rampe d'indexage 3D.

Le document "EP 1 304 259 A" décrit un dispositif d'indexage mécanique selon le préambule de la revendication 1.

La Demanderesse a cependant constaté que les systèmes d'indexage ainsi connus ne donnent pas toujours totalement satisfaction. Plus précisément, la Demanderesse a déterminé que les systèmes d'indexage connus conduisent à des pressions de contact élevées et génèrent une usure prononcée des pièces en contact. Cela est dû en particulier à la géométrie sphérique des poussoirs connus qui ne permet qu'un contact ponctuel avec la rampe d'indexage.

Le but de la présente invention est de proposer des moyens permettant d'améliorer la situation.

Ce but est atteint dans le cadre de la présente invention grâce à un dispositif d'indexage comprenant un poussoir sollicité par un organe élastique contre une rampe d'indexage, ledit dispositif d'indexage autorisant un déplacement relatif selon deux directions entre deux sous-ensembles portant respectivement le poussoir et la rampe d'indexage, caractérisé par le fait que la géométrie de la surface du poussoir dirigée vers la rampe est adaptée pour définir un contact linéique suivant une direction de déplacement relatif.

La présente invention s'applique également aux commutateurs électriques intégrant un système d'indexage du type précité.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 représente une vue schématique en perspective éclatée d'un système d'indexage conforme à la présente invention,
- les figures 2 et 3 représentent la coopération définie entre le poussoir d'indexage et la rampe d'indexage conformes à la présente invention illustrés sur la figure 1, selon deux plans orthogonaux,
- la figure 4 représente une variante de la figure 3,
- la figure 5 représente une variante de poussoir conforme à la présente invention de forme en tonneau,
- la figure 6 représente la coopération définie entre ce poussoir en tonneau et la rampe d'indexage associée, dans le plan d'indexage correspondant à la figure 3,
- la figure 7 représente une variante de la figure 6 analogue à la figure 4,
- la figure 8 représente une autre variante de poussoir conforme à la présente invention, de forme en diabolo,
- la figure 9 représente la coopération définie entre ce poussoir en diabolo et la rampe d'indexage associée, dans le plan d'indexage correspondant à la figure 3,
- la figure 10 représente une variante de la figure 9 analogue à la figure 4.

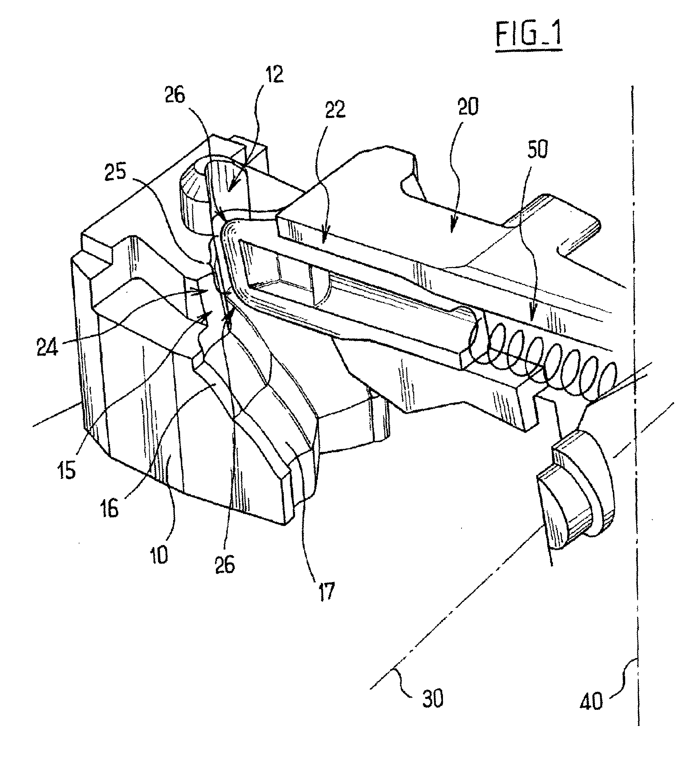

On aperçoit sur la figure 1 une embase 10 et un équipage 20 susceptibles de déplacement relatif selon deux directions. Plus précisément, selon le mode de réalisation illustré schématiquement sur la figure 1 annexée, l'équipage 20 est susceptible de déplacement, par rapport à l'embase 10, par rotation autour de deux axes orthogonaux référencés respectivement 30 et 40.

La géométrie de l'embase 10 et de l'équipage 20 peut faire l'objet de nombreuses variantes de réalisation. Ces embase 10 et équipage 20 ne seront donc pas décrits dans le détail par la suite.

On aperçoit par ailleurs sur la figure 1 annexée, des moyens d'indexage composés d'un ensemble de rampes 12 portées par l'embase 10 et d'un poussoir 22 porté par l'équipage 20.

A titre d'exemple non limitatif, les rampes 12 sont formées sur un élément en matériau thermoplastique lié à l'embase 10 et de même le poussoir 22 est réalisé en un matériau thermoplastique. En variante, cependant, ces moyens peuvent être réalisés en tout autre matériau approprié.

La rampe 12 possède une surface évolutive par rapport aux deux axes de rotation 30, 40. En d'autres termes, la surface de la rampe 12 présente un rayon variable par rapport à chacun des deux axes 30, 40. Ainsi, lorsque l'équipage 20 est déplacé par rapport à l'embase 10 selon l'un de ces deux axes 30, 40, le poussoir 22, par son extrémité 24 s'appuie sur une surface de rayon variable, ce qui permet de définir la fonction d'indexage.

Le poussoir 22 est sollicité contre les rampes 12 par un organe élastique approprié. Celui-ci peut faire l'objet de nombreuses variantes et ne sera donc pas décrit dans le détail par la suite.

On a schématisé l'organe élastique sous la référence 50 sur la figure 1 annexée.

Comme indiqué précédemment dans le cadre de la présente invention, l'extrémité 24 du poussoir 22 qui repose contre les rampes 12 est adaptée pour définir un contact linéique sur les rampes 12 suivant l'une au moins des deux directions de déplacement relatif. A titre d'exemple à cette fin, l'extrémité 24 du poussoir 22 peut être définie par une forme 25 cylindrique complétée à chaque extrémité par deux calottes sphériques 26.

Selon le mode de réalisation illustré sur la figure 1, la forme cylindrique 25 est définie par une génératrice perpendiculaire à l'axe 30 et parallèle à l'axe 40.

En conséquence, les rampes 12, pour autoriser un contact linéique, comprennent d'une part lorsqu'elles sont parcourues par un mouvement de rotation autour de l'axe 30, une succession de tronçons référencés 15, 16, 17 définis eux-mêmes globalement par des génératrices perpendiculaires à des rayons dressés à partir de l'axe 30 et d'autre part lorsqu'elles sont parcourues par un mouvement de rotation autour de l'axe 40, une succession de concavités 18, 15, 19 dirigées vers cet axe 40 et définies par des génératrices parallèles à cet axe 40.

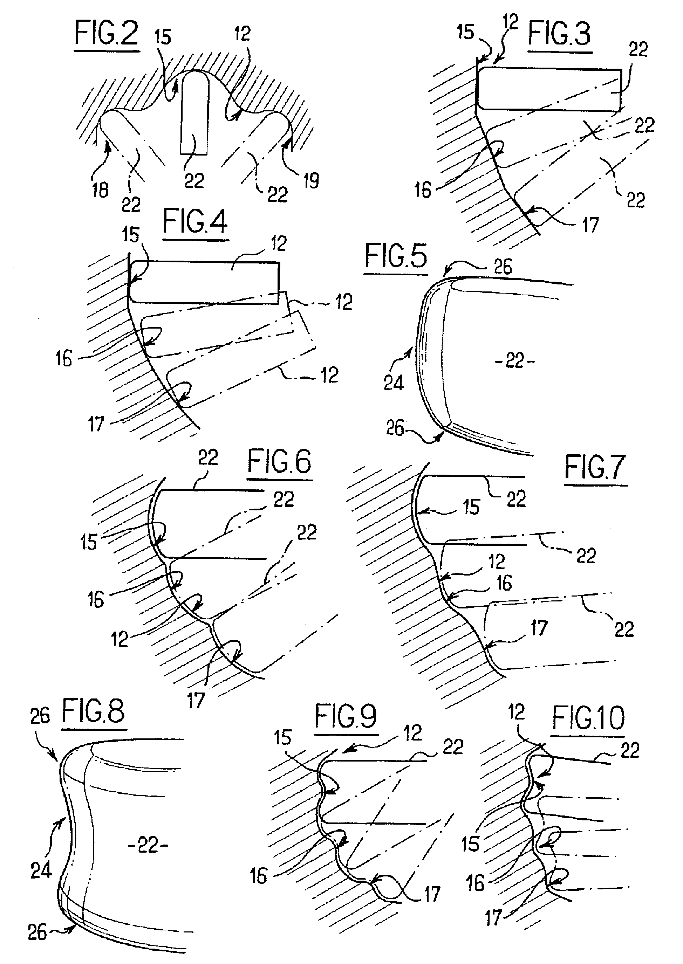

Lorsque le mouvement de l'équipage 20 est opéré perpendiculairement au cylindre, c'est-à-dire par rotation autour de l'axe 40, le contact entre l'extrémité 24 du poussoir 22 et les rampes d'indexage 12, plus précisément l'une des concavités 18, 15, 19, se fait suivant une génératrice du cylindre, comme on le voit sur la figure 2. Lorsque le mouvement de l'équipage 20 est opéré parallèlement au cylindre, c'est-à-dire par rotation autour de l'axe 30, le contact entre l'extrémité 24 du poussoir 22 et les rampes d'indexage 12, plus précisément l'un des tronçons 15, 16, 17, se fait ponctuellement par une des sphères 26, comme on le voit sur la figure 3.

De préférence dans le cadre de la présente invention, le contact linéique est choisi de manière à réduire la pression de contact suivant la direction la plus contraignante ou la plus utilisée et ainsi limiter l'usure.

La présente invention trouve tout particulièrement application dans l'indexage d'une manette de commande d'éclairage d'un véhicule automobile. La manette dans ce contexte peut être actionnée dans une direction pour la commande des indicateurs de changement de direction et dans une direction perpendiculaire pour la commande des phares. Toujours dans ce contexte, le poussoir 22 pourra être positionné de sorte que la génératrice de la forme cylindrique 25 soit placée perpendiculairement aux mouvements de commande des indicateurs de changement de direction, puisque leur utilisation est plus fréquente que les phares (en d'autres termes la commande des indicateurs de changement de direction est opérée par rotation de l'équipage 20 autour de l'axe 40).

Ainsi pendant toutes les manoeuvres de rotation autour de l'axe 40, les plus fréquentes, le poussoir 22 reste en contact par une génératrice contre l'une des concavités 18, 15, 19 de la rampe d'indexage 12.

Bien entendu la présente invention n'est pas limitée aux modes de réalisation particuliers qui viennent d'être décrits mais s'étend à toute variante conforme à son esprit.

En effet d'autres formes que le cylindre 25 terminé par deux calottes sphériques 26 peuvent être retenues pour définir un contact linéique dans une direction, tout en autorisant un mouvement suivant l'autre direction.

A titre d'exemple non limitatif, on peut citer une forme de tonneau "ou cylindre bombé" comportant deux sphères en extrémité, comme représenté sur la figure 5 ou encore une forme de diabolo "ou cylindre réduit en son centre" comportant deux sphères en extrémité, comme représenté sur la figure 8.

La surface des rampes d'indexage 12 placées en regard doit être adaptée en conséquence pour rester complémentaire du poussoir 22 afin de garantir le contact linéique conforme à la présente invention.

Plus précisément encore, la surface des rampes d'indexage 12 peut être adaptée pour être complémentaire de l'extrémité du poussoir 22, quelle que soit la position de ce dernier dans ses deux déplacements de rotation autour de chacun des axes 30 et 40, comme illustré sur les figures 2, 3, 6 et 9.

Cependant en variante, comme on l'a illustré sur les figures 4, 7 et 10 un tel contact linéique peut être limité à une seule position angulaire du poussoir 22 dans sa rotation possible par rapport à l'axe 30. Comme indiqué précédemment cette position est choisie de préférence comme étant celle qui est la plus utilisée (commande d'indicateurs de changement de direction par exemple). Sur les figures 4, 7 et 10 cette position garantissant un contact linéique est celle représentée en partie supérieure dans laquelle le poussoir 22 repose sur le tronçon 15 (le contact linéique est maintenu dans cette position quelle que soit la position du poussoir dans sa rotation autour de l'axe 40).

## Revendications

1. Dispositif d'indexage mécanique comprenant un poussoir (20) sollicité par un organe élastique (50) contre une rampe d'indexage (12) et deux sous-ensembles (10, 20) qui portent respectivement la rampe d'indexage (12) et le poussoir d'indexage (22), susceptibles de déplacement relatif selon deux directions inclinées, de préférence orthogonales entre elles, **caractérisé par le fait que** la géométrie de la surface du poussoir (20) dirigée vers la rampe (12) est adaptée pour définir un contact linéique suivant une direction de déplacement autorisé.

2. Dispositif selon la revendications 1, **caractérisé par le fait que** l'extrémité (24) du poussoir (22) est définie par une forme cylindrique (25) complétée par deux sphères (26) respectivement à chaque extrémité.

3. Dispositif selon la revendication 1 , **caractérisé par le fait que** l'extrémité (24) du poussoir (22) est définie par une forme de tonneau ou cylindre bombé possédant deux sphères en extrémité.

4. Dispositif selon la revendication 1 , **caractérisé par le fait que** l'extrémité (24) du poussoir (22) est définie par une forme de diabolo ou cylindre réduit en son centre possédant deux sphères en extrémité.

5. Dispositif selon l'une des revendications 1 à 4, **caractérisé par le fait que** le contact linéique est positionné pour être utilisé sur la direction de déplacement la plus contraignante entre les deux sous-ensembles.

6. Dispositif selon l'une des revendications 1 à 5, **caractérisé par le fait que** la rampe d'indexage (12) comprend une pluralité de tronçons (15, 16, 17) définis par des génératrices complémentaires de celle du poussoir (22).

7. Dispositif selon l'une des revendications 1 à 6, **caractérisé par le fait que** la rampe d'indexage (12) comprend d'une part lorsqu'elle est parcourue par un mouvement de rotation autour d'un premier axe (30), une succession de tronçons (15, 16, 17) définis eux-mêmes globalement par des génératrices perpendiculaires à des rayons dressés à partir de cet axe (30) et d'autre part lorsqu'elle est parcourue par un mouvement de rotation autour d'un second axe (40), une succession de concavités (18, 15, 19) dirigées vers cet axe (40) et définies par des génératrices parallèles à cet axe (40).

8. Dispositif selon l'une des revendications 1 à 7, **caractérisé par le fait que** la surface de la rampe d'indexage (12) est adaptée pour être complémentaire de l'extrémité du poussoir (22), quelle que soit la position de ce dernier dans ses deux déplacements de rotation autour de chacun des axes (30, 40).

9. Dispositif selon l'une des revendications 1 à 7, **caractérisé par le fait que** le contact linéique est limité à une seule position angulaire du poussoir (22) dans sa rotation possible par rapport à l'un (30) des axes.

10. Commutateur électrique, notamment pour véhicules automobiles, **caractérisé par le fait qu'**il intègre un dispositif d'indexage conforme à l'une des revendications 1 à 9.

11. Commutateur électrique selon la revendication 10, **caractérisé par le fait qu'**il comprend une manette de commande d'éclairage associée à un dispositif d'indexage conforme à l'une des revendications 1 à 9.

12. Commutateur selon l'une des revendications 10 ou 11, **caractérisé par le fait qu'**il comprend un poussoir d'indexage (22) comportant une forme généralement cylindrique dont la génératrice est perpendiculaire à la direction de déplacement requise pour la commande d'indicateurs de changement de direction.

## Claims

1. Mechanical indexing device comprising a button (22) pressed by an elastic member (50) against an indexing ramp (12) and two subassemblies (10, 20) which support respectively the indexing ramp (12) and the indexing button (22), capable of relative movement in two inclined directions, preferably orthogonal to one another, **characterized in that** the geometry of the surface of the button (22) directed towards the ramp (12) is suitable for defining a lineic contact in the direction of authorized movement.

2. Device according to Claim 1, **characterized in that** the end (24) of the button (22) is defined by a cylindrical shape (25) supplemented by two spheres (26) respectively at each end.

3. Device according to Claim 1, **characterized in that** the end (24) of the button (22) is defined by a barrel or curved cylinder shape having two spheres at the end.

4. Device according to Claim 1, **characterized in that** the end (24) of the button (22) is defined by a shape of a spool or cylinder narrowed at its centre having two spheres at the end.

5. Device according to one of Claims 1 to 4, **characterized in that** the lineic contact is positioned in order to be used on the direction of movement that is the most limited between the two subassemblies.

6. Device according to one of Claims 1 to 5, **characterized in that** the indexing ramp (12) comprises a plurality of sections (15, 16, 17) defined by generatrices that complement that of the button (22).

7. Device according to one of Claims 1 to 6, **characterized in that** the indexing ramp (12) comprises, on the one hand when it is travelled by a rotary movement about a first axis (30), a succession of sections (15, 16, 17) themselves generally defined by generatrices perpendicular to radii drawn from this axis (30) and, on the other hand when it is travelled by a rotary movement about a second axis (40), a succession of concavities (18, 15, 19) directed towards this axis (40) and defined by generatrices parallel to this axis (40).

8. Device according to one of Claims 1 to 7, **characterized in that** the surface of the indexing ramp (12) is suitable for being complementary to the end of the button (22) irrespective of the position of the latter in its two rotary movements about each of the axes (30, 40).

9. Device according to one of Claims 1 to 7, **characterized in that** the lineic contact is limited to a single angular position of the button (22) in its possible rotation relative to one (30) of the axes.

10. Electric switch, notably for motor vehicles, **characterized in that** it incorporates an indexing device according to one of Claims 1 to 9.

11. Electric switch according to Claim 10, **characterized in that** it comprises a lighting control lever associated with an indexing device according to one of Claims 1 to 9.

12. Switch according to one of Claims 10 or 11, **characterized in that** it comprises an indexing button (22) comprising a generally cylindrical shape the generatrix of which is perpendicular to the direction of movement required for controlling direction indicators.

## Patentansprüche

1. Mechanische Indexiervorrichtung, die einen Stößel (22), der von einem elastischen Organ (50) gegen eine Indexierrampe (12) beaufschlagt wird, und zwei Untereinheiten (10, 20) enthält, die die Indexierrampe (12) bzw. den Indexierstößel (22) tragen, die eine relative Verschiebung gemäß zwei schrägen Richtungen, vorzugsweise orthogonal zueinander, ausführen können, **dadurch gekennzeichnet, dass** die Geometrie der Fläche des Stößels (22), die zur Rampe (12) gerichtet ist, geeignet ist, um einen linearen Kontakt gemäß einer erlaubten Verschieberichtung zu definieren.

2. Vorrichtung nach Anspruch 1, **dadurch gekennzeichnet, dass** das Ende (24) des Stößels (22) durch eine zylindrische Form (25) definiert wird, vervollständigt durch zwei Abrundungen (26) an jedem Ende.

3. Vorrichtung nach Anspruch 1, **dadurch gekennzeichnet, dass** das Ende (24) des Stößels (22) durch eine Form eines Fasses oder eines gewölbten Zylinders definiert wird, die am Ende zwei Abrundungen besitzt.

4. Vorrichtung nach Anspruch 1, **dadurch gekennzeichnet, dass** das Ende (24) des Stößels (22) durch eine Form einer Doppelkegelrolle oder eines in seiner Mitte verjüngten Zylinders definiert wird, die am Ende zwei Abrundungen besitzt.

5. Vorrichtung nach einem der Ansprüche 1 bis 4, **dadurch gekennzeichnet, dass** der lineare Kontakt positioniert ist, um in der am strengsten festgelegten Verschieberichtung zwischen den zwei Untereinheiten verwendet zu werden.

6. Vorrichtung nach einem der Ansprüche 1 bis 5, **dadurch gekennzeichnet, dass** die Indexierrampe (12) mehrere Abschnitte (15, 16, 17) enthält, die durch zur Mantellinie des Stößels (22) komplementäre Mantellinien definiert sind,

7. Vorrichtung nach einem der Ansprüche 1 bis 6, **dadurch gekennzeichnet, dass** die Indexierrampe (12) einerseits, wenn sie von einer Drehbewegung um eine erste Achse (30) durchlaufen wird, eine Folge von Abschnitten (15, 16, 17), die selbst global von Mantellinien lotrecht zu ausgehend von dieser Achse (30) ausgerichteten Radien definiert werden, und andererseits, wenn sie von einer Drehbewegung um eine zweite Achse (40) durchlaufen wird, eine Folge von zu dieser Achse (40) gerichteten und von Mantellinien parallel zu dieser Achse (40) definierten Vertiefungen (18, 15, 19) enthält.

8. Vorrichtung nach einem der Ansprüche 1 bis 7, **dadurch gekennzeichnet, dass** die Fläche der Indexierrampe (12) geeignet ist, um komplementär zum Ende des Stößels (22) zu sein, unabhängig von dessen Position in seinen zwei Drehverschiebungen um jede der Achsen (30, 40).

9. Vorrichtung nach einem der Ansprüche 1 bis 7, **dadurch gekennzeichnet, dass** der lineare Kontakt auf eine einzige Winkelstellung des Stößels (22) in seiner möglichen Drehung bezüglich einer (30) der Achsen begrenzt ist.

10. Elektrischer Schalter, insbesondere für Kraftfahrzeuge, **dadurch gekennzeichnet, dass** er eine Indexiervorrichtung nach einem der Ansprüche 1 bis 9 enthält.

11. Elektrischer Schalter nach Anspruch 10, **dadurch gekennzeichnet, dass** er einen Beleuchtungssteuerhebel enthält, der einer Indexiervorrichtung nach einem der Ansprüche 1 bis 9 zugeordnet ist.

12. Schalter nach einem der Ansprüche 10 oder 11, **dadurch gekennzeichnet, dass** er einen Indexierstößel (22) enthält, der eine allgemein zylindrische Form aufweist, deren Mantellinie lotrecht zu der Verschieberichtung ist, die für die Steuerung von Fahrtrichtungsanzeigern erforderlich ist.
